(19) Europäisches Patentamt / European Patent Office / Office européen des brevets

(11) **EP 4 058 510 B1**

(12) **EUROPÄISCHE PATENTSCHRIFT**

(45) Veröffentlichungstag und Bekanntmachung des Hinweises auf die Patenterteilung:
**29.11.2023 Patentblatt 2023/48**

(21) Anmeldenummer: **20803603.8**

(22) Anmeldetag: **13.11.2020**

(51) Internationale Patentklassifikation (IPC):
**C08J 9/16** (2006.01)    **C08J 9/232** (2006.01)

(52) Gemeinsame Patentklassifikation (CPC):
**C08J 9/16; C08J 9/232;** C08J 2207/00;
C08J 2300/22; C08J 2300/26; C08J 2375/04

(86) Internationale Anmeldenummer:
**PCT/EP2020/082052**

(87) Internationale Veröffentlichungsnummer:
**WO 2021/094530 (20.05.2021 Gazette 2021/20)**

(54) **KOMFORT ETPU**

COMFORT ETPU

E-TPU CONFORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2019 EP 19208917**

(43) Veröffentlichungstag der Anmeldung:
**21.09.2022 Patentblatt 2022/38**

(73) Patentinhaber: **BASF SE**
**67056 Ludwigshafen am Rhein (DE)**

(72) Erfinder:
• **PRISSOK, Frank**
**49448 Lemfoerde (DE)**
• **POESELT, Elmar**
**49448 Lemfoerde (DE)**
• **SCHMIDT, Lisa Marie**
**49448 Lemfoerde (DE)**
• **HUELSMANN, Theresa**
**49448 Lemfoerde (DE)**
• **THIELBEER, Frank**
**49448 Lemfoerde (DE)**
• **GUTMANN, Peter**
**67056 Ludwigshafen am Rhein (DE)**
• **KEPPELER, Uwe**
**67056 Ludwigshafen am Rhein (DE)**

(74) Vertreter: **BASF IP Association**
**BASF SE**
**GBI-C006**
**67056 Ludwigshafen (DE)**

(56) Entgegenhaltungen:
WO-A1-94/20568    WO-A1-2007/082838
WO-A1-2010/010010    US-A- 6 020 390
US-A1- 2003 130 365    US-A1- 2017 174 816

**Beschreibung**

Die vorliegende Erfindung betrifft Formkörper, umfassend einen Schaum aus einem thermoplastischen Elastomer (TPE-1), wobei der Schaum einen Speicher-Modul (G-Modul) bei 25 °C und 1 Hz im Bereich von 0,01 bis 0, 5 MPa , eine Formteil-Dichte im Bereich von 20 bis 400 kg/m$^3$ und einen Komfort-Faktor, d.h. ein Stauchhärteverhältnis (StH65%/StH25%), bestimmt gemäß Referenzbeispiel 3, von größer als 4, aufweist. Weiterhin betrifft die vorliegende Erfindung ein Verfahren zur Herstellung derartiger Formkörper sowie die Verwendung eines erfindungsgemäßen Formkörpers zur Herstellung von Böden, Matratzen, Sitzmöbeln, eines Fahrradsattels, von Autositzen, Motorradsitze, Bauteilen eines Schuhs, als Schuheinleger, Verpackung, Stoßdämpfer, Protektoren, Fallschutzmatten, elastisches Dämmmaterial, Dichtungsmaterial.

Schaumstoffe, insbesondere auch Partikelschaumstoffe, sind seit langem bekannt und in der Literatur vielfach beschrieben, z.B. in Ullmanns "Encyklopädie der technischen Chemie", 4. Auflage, Band 20, S. 416 ff.

Hochelastische, weitgehend geschlossenzellige Schäume, wie Partikelschäume aus thermoplastischem Elastomeren, die z.B. im Autoklaven oder nach dem Extruderverfahren hergestellt werden, zeigen besondere dynamische Eigenschaften und zum Teil auch gute Rückprallelastizitäten. Auch Hybridschäume aus Partikeln von thermoplastischen Elastomeren und Systemschaum oder Bindern sind bekannt. Abhängig von der Schaumdichte, der Herstellweise und dem Matrixmaterial kann insgesamt ein relativ breites Steifigkeitsniveau abgebildet werden. Auch durch eine Nachbehandlung des Schaumes wie Tempern können die Eigenschaften des Schaumes beeinflusst werden.

Geschäumte Granulate, die auch als Partikelschäume (oder Partikelschaumstoffe, Partikelschaum) bezeichnet werden, sowie daraus hergestellte Formkörper auf Basis von thermoplastischem Polyurethan oder anderen Elastomeren sind bekannt (z.B. WO 94/20568, WO 2007/082838 A1, WO2017/030835, WO 2013/153190 A1, WO2010/010010) und vielfältig einsetzbar.

Ein geschäumtes Granulat oder auch ein Partikelschaum oder Partikelschaumstoff im Sinne der vorliegenden Erfindung bezeichnet einen Schaumstoff in Form eines Partikels, wobei der mittlere Durchmesser der Partikel zwischen 0,2 bis 20, bevorzugt 0,5 bis 15 und insbesondere zwischen 1 bis 12 mm liegt. Bei nicht kugelförmigen, z.B. länglichen oder zylinderförmigen Partikeln ist mit Durchmesser die längste Abmessung gemeint.

Polymere auf Basis von thermoplastischen Elastomeren (TPE) werden bereits in verschiedenen Bereichen eingesetzt. Je nach Anwendung können die Eigenschaften des Polymers modifiziert werden. Insbesondere thermoplastische Polyurethane werden vielfältig eingesetzt.

Für Anwendungen im Polsterbereich ist eine gute Dämpfung erforderlich, um einen hohen Sitzkomfort zu gewährleisten. Beim Sitzen auf weichen Sitzmaterialien kommt es allerdings oft zu einer sehr starken Kompression des Materials und ab einem höheren Kompressionsgrad zu einer schlagartigen Verhärtung des Materials, welches meist ein offenzelliger PU Schaum ist, wodurch das Material für den Nutzer unangenehm verhärtet.

Somit war es eine Aufgabe der vorliegenden Erfindung, Formkörper auf Basis von thermoplastischen Elastomeren bereitzustellen, die eine gute Dämpfung und einstellbare Rückpralleigenschaften aufweisen und gleichzeitig einen hohen Sitzkomfort bieten. Geeignet sind insbesondere Materialien, bei denen die Versteifung langsam mit zunehmender Kompression steigt, um mehr Stabilität beim Sitzen zu bewirken. Eine weitere Aufgabe der vorliegenden Erfindung war es, ein Verfahren zur Herstellung der entsprechenden Formkörper bereitzustellen.

Erfindungsgemäß wird diese Aufgabe gelöst durch Formkörper, umfassend einen Schaum aus einem thermoplastischen Elastomer (TPE-1), wobei der Schaum einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, wobei der Schaum ein geschäumtes Granulat ist.

Die Erfindung betrifft auch Formkörper, umfassend einen Schaum aus einem thermoplastischen Elastomer (TPE-1), wobei der Schaum einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, wobei der Schaum einen Komfort-Faktor von größer als 4 aufweist, bestimmt gemäß Referenzbeispiel 3.

Liegt der Schaum im Formkörper als nicht verbundener Partikel vor, so entspricht die Formteil-Dichte, bestimmt durch Referenzbeispiel 2, im Rahmen der vorliegenden Erfindung der Schüttdichte, bestimmt durch Referenzbeispiel 4 oder größer.

Überraschenderweise wurde gefunden, dass bei der Verwendung von weitestgehend geschlossenzelligen Schäumen auf Basis thermoplastischer Elastomere, insbesondere von geschäumten Granulaten, mit niedrigem Speicher-Modul und einer Formteil-Dichte im Bereich von 20 bis 400 kg/m$^3$ ein Schaum mit niedriger Steifigkeit erzielt werden konnte, der beim Sitzen nicht schlagartig komprimiert, sondern in Abhängigkeit zum Kompressionsgrad stetig versteift. Durch die erfindungsgemäße Verwendung eines geschäumten Granulats mit den definierten Eigenschaften, also einem Speicher-Modul (G-Modul) bei 25 °C und 1 Hz im Bereich von 0,01 bis 0, 5 MPa, bestimmt gemäß Referenzbeispiel 1 (TPE Formteil), und einer Formteil-Dichte im Bereich von 20 bis 400 kg/m$^3$, bestimmt gemäß Referenzbeispiel 2, werden Formkörper erhalten, die beispielsweise besonders günstige Eigenschaftskombinationen für Sitzmöbel haben. So wurde

EP 4 058 510 B1

gefunden, dass gerade ein Komfort-Faktor von größer als 4, bestimmt gemäß Referenzbeispiel 3 einen wesentlichen Einfluss auf den Komfort beim Sitzen hat. Durch die erfindungsgemäße Kombination der Eigenschaften des eingesetzten Schaums kann ein Formkörper erhalten werden, der einen Komfort-Faktor von größer als 4, bestimmt gemäß Referenzbeispiel 3 aufweist. Das Stauchverhalten des Formkörpers ähnelt am Anfang dem eines offenzelligen Weichschaums und später einem geschlossenzelligen Partikelschaum, wobei nicht wie beim offenzelligen Weichschaum die Verhärtung schlagartig zum Tragen kommt, sondern ein kontinuierlicher Anstieg des Gegendrucks auftritt, der den Nutzer abbremst.

Überraschenderweise sind neben dem G-Modul des thermoplastischen Elastomers auch der G-Modul des Schaums und die Dichte des Schaums entscheidend für die Anfangssteifigkeit. Ferner ist eine regelmäßige Schaumstruktur vorteilhaft, da diese gleichmäßig komprimiert wird und folglich am Anfang weicher erscheint.

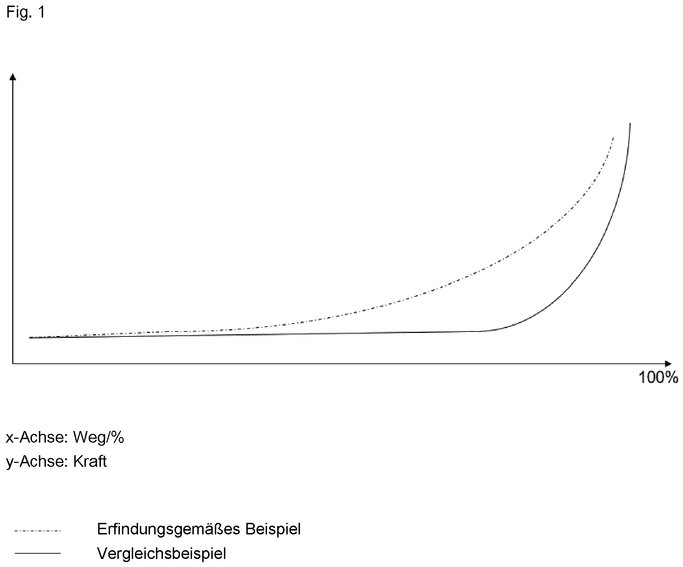

So zeigt beispielsweise der in Figur 1 dargestellte schematische Vergleich der Spannungs-Dehnungskurven eines erfindungsgemäßen Beispiels mit einem Vergleichsbeispiel, dass der Anlauf zunächst flach ist und langsam ansteigt.

Der erfindungsgemäße Formkörper umfasst einen Schaum aus einem thermoplastischen Elastomer (TPE-1), der einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, sowie vorzugsweise einen Komfort Faktor von größer als 4 aufweist, bestimmt gemäß Referenzbeispiel 3. Erfindungsgemäß kann der Schaum dabei im Rahmen der vorliegenden Erfindung ein Blockschaum sein oder auch aus einem geschäumten Granulat bestehen oder ein geschäumtes Granulat umfassen. Erfindungsgemäß ist es dabei möglich, dass der Formkörper die Partikel des geschäumten Granulats in Form der einzelnen Partikel umfasst oder in fusionierter Form, beispielsweise in Form verschweißter oder verklebter Partikel des geschäumten Granulats. Erfindungsgemäß ist es auch möglich, dass die Partikel des geschäumten Granulats von einer Matrix umgeben sind, also beispielsweise in einen Schaum oder ein kompaktes Polymer eingebettet sind. Unter einem Schaum, der ein geschäumtes Granulat ist, werden im Rahmen der vorliegenden Erfindung Ausführungsformen verstanden, bei denen der Schaum aus einem geschäumten Granulat besteht oder ein geschäumtes Granulat umfasst. Erfindungsgemäß kann ein Schaum, der ein geschäumtes Granulat ist, auch ein geschäumtes Granulat umgeben von einer Matrix sein.

Erfindungsgemäß weist der Schaum vorzugsweise einen Komfort-Faktor von größer als 4 auf, bestimmt gemäß Referenzbeispiel 3, bevorzugt einen Komfort-Faktor im Bereich von 4 bis 12, beispielsweise in einem Bereich von 5 bis 11 oder auch in einem Bereich von 5 bis 10, jeweils bestimmt gemäß Referenzbeispiel 3.

Verfahren zur Herstellung geschäumter Granulate aus thermoplastischen Elastomeren sind dem Fachmann an sich bekannt. Sofern erfindungsgemäß ein geschäumtes Granulat aus dem thermoplastischen Elastomer (TPE-1) eingesetzt wird, liegt die Schüttdichte des geschäumten Granulats beispielsweise im Bereich von 20 g/l bis 250 g/l, bevorzugt 50 g/l bis 180 g/l, besonders bevorzugt 60 g/l bis 150 g/l.

Beispielsweise liegt der Durchmesser der geschäumten Granulate zwischen 0,2 bis 20 bevorzugt 1 bis 15 und insbesondere zwischen 3 bis 12 mm. Bei nicht kugelförmigen, z.B. länglichen oder Zylinder förmigen geschäumten Granulaten ist mit Durchmesser die längste Abmessung gemeint.

Gemäß einer Ausführungsform betrifft die vorliegende Erfindung auch einen Formkörper wie zuvor beschrieben, wobei der Schaum ein geschäumtes Granulat ist.

Geeignete thermoplastische Elastomere zur Herstellung der erfindungsgemäßen Schäume bzw. Formkörper sind dem Fachmann an sich bekannt. Geeignete thermoplastische Elastomere werden beispielsweise beschrieben in "Handbook of Thermoplastic Elastomers", 2. Auflage Juni 2014. Beispielsweise kann das thermoplastische Elastomer (TPE-1) ein thermoplastisches Polyurethan, ein thermoplastisches Polyetheramid, ein Polyetherester, ein Polyesterester, ein thermoplastisches Elastomer auf Olefinbasis, ein vernetztes thermoplastisches Elastomer auf Olefinbasis bzw. ein thermoplastisches Vulkanisat oder ein thermoplastisches Styrol Butadien-Blockcopolymer sein. Erfindungsgemäß kann das thermoplastische Elastomer (TPE-1) vorzugsweise ein thermoplastisches Polyurethan, ein thermoplastisches Polyetheramid, ein Polyetherester, ein Polyesterester, oder ein thermoplastisches Styrol Butadien-Blockcopolymer sein.

Weiter bevorzugt ist das thermoplastische Elastomer (TPE-1) im Rahmen der vorliegenden Erfindung ein thermoplastisches Polyurethan, ein thermoplastisches Polyetheramid oder ein Polyesterester oder Polyetherester.

Demgemäß betrifft die vorliegende Erfindung gemäß einer weiteren Ausführungsform auch einen Formkörper wie zuvor beschrieben, wobei das thermoplastische Elastomer (TPE-1) ausgewählt ist aus der Gruppe bestehend aus thermoplastischen Polyurethanen, thermoplastischen Polyetheramiden, Polyetherestern, Polyesterestern, thermoplastischen Elastomeren auf Olefinbasis, vernetzten thermoplastischen Elastomeren auf Olefinbasis, thermoplastischen Vulkanisaten oder thermoplastischen Styrol Butadien-Blockcopolymeren, insbesondere ausgewählt aus thermoplastischen Polyurethanen, thermoplastischen Polyetheramiden, Polyetherestern, Polyesterestern, oder thermoplastischen Styrol Butadien-Blockcopolymeren.

Geeignete thermoplastische Elastomere sind insbesondere solche, die in kompaktem Zustand ein G-Modul im Bereich von 0,8 bis 8,5 MPa aufweisen, bestimmt gemäß Referenzbeispiel 6.

Demgemäß betrifft die vorliegende Erfindung gemäß einer weiteren Ausführungsform auch einen Formkörper wie zuvor beschrieben, wobei das thermoplastische Elastomer (TPE-1) in kompaktem Zustand ein G-Modul im Bereich von 0,8 bis 8,5 MPa aufweist, bestimmt gemäß Referenzbeispiel 6.

Geeignete Herstellungsverfahren dieser thermoplastischen Elastomere bzw. Schäume oder geschäumter Granulate aus den genannten thermoplastischen Elastomeren sind dem Fachmann ebenfalls an sich bekannt.

Geeignete thermoplastische Polyetherester und Polyesterester können nach allen gängigen, literaturbekannten Verfahren durch Umesterung bzw. Veresterung von aromatischen und aliphatischen Dicarbonsäuren mit 4 bis 20 C-Atomen bzw. deren Estern mit geeigneten aliphatischen und aromatischen Di- und Polyolen hergestellt werden (vgl. "Polymer Chemistry", Interscience Publ., New York, 1961, S.111-127; Kunststoffhandbuch, Band VIII, C. Hanser Verlag, München 1973 und Journal of Polymer Science, Part A1, 4, Seiten 1851-1859 (1966)). Geeignete aromatische Dicarbonsäuren sind unter anderem z.B. Phthalsäure, Iso- und Terephthalsäure bzw. deren Ester. Geeignete aliphatische Dicarbonsäuren sind unter anderem z.B. Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren.

Als Diolkomponente eignen sich beispielsweise Diole der allgemeinen Formel $HO-(CH_2)_n-OH$, mit n = 2 bis 20, wie Ethylenglykol, Propandiol-(1,3), Butandiol-(1,4) oder Hexandiol-(1,6) Polyetherole der allgemeinen Formel $HO-(CH_2)_n-O-(CH_2)_m-OH$, wobei n gleich oder ungleich m und n bzw. m = 2 bis 20, ungesättigte Diole und Polyetherole wie beispielsweise Butendiol-(1,4); Diole und Polyetherole enthaltend aromatische Einheiten; sowie Polyesterole.

Neben den genannten Carbonsäuren bzw. deren Estern sowie den genannten Alkoholen können alle weiteren gängigen Vertreter dieser Verbindungsklassen zur Bereitstellung der erfindungsgemäß eingesetzten Polyetherester und Polyesterester verwendet werden.

Die thermoplastischen Polyetheramide können nach allen gängigen, literaturbekannten Verfahren durch Reaktion von Aminen und Carbonsäuren bzw. deren Estern erhalten werden. Amine und oder Carbonsäure enthalten hierbei zudem Ethereinheiten des Typs R-O-R, wobei R = organischer Rest (aliphatisch und / oder aromatisch). Im Allgemeinen werden Monomere der folgenden Verbindungsklassen eingesetzt: $HOOC-R'-NH_2$, wobei R' aromatisch und aliphatisch, bevorzugt enthaltend Ethereinheiten des Typs R-O-R, sein kann, wobei R = organischer Rest (aliphatisch und / oder aromatisch); aromatische Dicarbonsäuren, unter anderem z.B. Phthalsäure, Iso- und Terephthalsäure bzw. deren Ester sowie aromatische Dicarbonsäuren enthaltend Ethereinheiten des Typs R-O-R, sein kann, wobei R = organischer Rest (aliphatisch und / oder aromatisch); aliphatische Dicarbonsäuren, unter anderem z.B. Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte sowie aliphatische Dicarbonsäuren enthaltend Ethereinheiten des Typs R-O-R, sein kann, wobei R = organischer Rest (aliphatisch und / oder aromatisch); Diamine der allgemeinen Formel $H_2N-R''-NH_2$, wobei R'' aromatisch und aliphatisch, bevorzugt enthaltend Ethereinheiten des Typs R-O-R, wobei R = organischer Rest (aliphatisch und / oder aromatisch), sein kann; Lactame, wie beispielsweise ε-Caprolactam, Pyrrolidon oder Laurinlactam; sowie Aminosäuren.

Neben den genannten Carbonsäuren bzw. deren Estern sowie den genannten Aminen, Lactamen und Aminosäuren können alle weiteren gängigen Vertreter dieser Verbindungsklassen zur Bereitstellung des erfindungsgemäß eingesetzten Polyetheramins verwendet werden.

Die erfindungsgemäß eingesetzten thermoplastischen Elastomere mit Blockcopolymerstruktur enthalten bevorzugt vinylaromatische, Butadien- und Isopren- sowie Polyolefin- und vinylische Einheiten, bspw. Ethylen-, Propylen- & Vinylacetateinheiten. Bevorzugt sind Styrol-Butadien-Copolymere.

Die erfindungsgemäß eingesetzten thermoplastischen Elastomere mit Blockcopolymerstruktur, Polyetheramide, Polyetherester und Polyesterester werden vorzugsweise so gewählt, dass deren Schmelzpunkte bei ≤300°C, bevorzugt ≤250°C, insbesondere ≤220°C liegen.

Die erfindungsgemäß eingesetzten thermoplastischen Elastomere mit Blockcopolymerstruktur, Polyetheramide, Polyetherester und Polyesterester können teilkristallin oder amorph sein.

Geeignete thermoplastische Elastomer auf Olefinbasis (TPO) weisen insbesondere ein Hartsegment und ein Weichsegment auf, wobei das Hartsegment beispielsweise ein Polyolefin wie Polypropylen und Polyethylen ist und das Weichsegment eine Kautschukkomponente wie beispielsweise Ethylen-Propylen-Kautschuk. Geeignet sind Blends eines Polyolefins und einer Kautschukkomponente, dynamisch vernetzte Typen und polymerisierte Typen.

Geeignet sind beispielsweise solche Strukturen, in denen ein Ethylen-Propylen-Kautschuk (EPM) in Polypropylen dispergiert ist; Strukturen, in denen ein vernetzter oder teilweise vernetzter Ethylen-Propylen-Dien-Kautschuk (EPDM) in Polypropylen dispergiert ist; statistische Copolymere von Ethylen und einem α-Olefin, wie Propylen und Buten; oder Blockcopolymere eines Polyethylenblocks und eines Ethylen / α-Olefin-Copolymerblocks. Geeignete α-Olefine sind beispielsweise Propylen, 1-Buten, 1-Penten, 1-Hexen, 1-Hepten, 1-Octen, 1-Nonen, 1-n Decen, 3-Methyl-1-buten und 4-Methyl-1-penten oder Mischungen dieser Olefine.

Geeignete semikristalline Polyolefin sind beispielsweise Homopolymere von Ethylen oder Propylen oder monomere Ethylen- und/oder Propyleneinheiten enthaltende Copolymere verwendet werden. Beispiele sind Copolymere von Ethylen und Propylen oder einem alpha-Olefin mit 4-12 C-Atomen und Copolymere von Propylen und einem alpha-Olefin mit 4-12 C-Atomen. Dabei ist vorzugsweise die Konzentration von Ethylen oder die Propylen in den Copolymeren so hoch, dass das Copolymer semikristallin ist.

Im Falle von statistischen Copolymeren sind beispielsweise ein Ethylengehalt oder ein Propylengehalt von etwa 70 mol-% oder mehr geeignet.

Geeignete Polypropylene sind Propylenhomoplymere oder auch Polypropylenblockcopolymere, beispielsweise statistische Copolymere von Propylen und bis zu etwa 6 mol-% Ethylen.

Geeignete thermoplastische Styrolblockcopolymere weisen üblicherweise Polystyrolblöcke und elastomere Blöcke auf. Geeignete Styrolblöcke sind beispielsweise ausgewählt aus Polystyrol, substituierten Polystyrolen, Poly(alpha-methylstyrolen), kernhalogenierten Styrolen, und kernalkylierten Styrolen. Geeignete elastomere Blöcke sind beispielsweise Polydienblöcke wie Polybutadiene und Polyisoprene, Poly(ethylen/butylen)copolymere und Poly(ethylen/propylen)copolymere, Polyisobutylene, oder auch Polypropylensulfide oder Polydiethylsiloxane.

Besonders vorteilhaft ist im Rahmen der vorliegenden Erfindung das thermoplastische Elastomer (TPE-1) ein thermoplastisches Polyurethan.

Thermoplastische Polyurethane sind aus dem Stand der Technik bekannt. Sie werden üblicherweise durch Umsetzung einer Polyisocyanatzusammensetzung mit einer Polyolzusammensetzung erhalten, wobei die Polyolzusammensetzung üblicherweise ein Polyol und einen Kettenverlängerer umfasst.

Erfindungsgemäß können die eingesetzten thermoplastischen Elastomere weitere Zusatzstoffe enthalten, beispielsweise übliche Hilfsstoffe wie beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Im Rahmen der vorliegenden Erfindung wurde gefunden, dass neben dem Speicher-Modul (G-Modul) und der Dichte des Schaums insbesondere der Komfort-Faktor einen wesentlichen Einfluss auf den Sitzkomfort hat.

Erfindungsgemäß wurde gefunden, dass es vorteilhaft ist, wenn bei der Messung gemäß Refernzbeispiel 5 nach dem 4. Zyklus der Schaum eine Stauchhärte bei 10% Kompressionvon kleiner oder gleich 22 kPa aufweist, weiter bevorzugt von kleiner als 20 kPa oder kleiner als 15 kPa. Im Rahmen der vorliegenden Erfindung wird "nach dem 4. Zyklus" derart verstanden, dass der entsprechende Wert auch bereits in einem vorherigen Messzyklus erreicht werden kann, d.h. der Messwert fällt spätestens bei der 4. Messung bzw. nach dem 4. Zyklus in den erfindungsgemäßen Bereich.

Vorzugsweise weist der Schaum eine Stauchhärte bei 25% Kompression nach dem 4. Zyklus von kleiner oder gleich 65 kPa auf, bestimmt gemäß Referenzbeispiel 5.

Gemäß einer weiteren Ausführungsform betrifft die vorliegende Erfindung demgemäß auch einen Formkörper wie zuvor beschrieben, wobei der Schaum eine Stauchhärte bei 10% Kompression nach dem 4. Zyklus von kleiner oder gleich 22 kPa aufweist, bestimmt gemäß Referenzbeispiel 5.

Gemäß einer weiteren Ausführungsform betrifft die vorliegende Erfindung demgemäß auch einen Formkörper wie zuvor beschrieben, wobei der Schaum eine Stauchhärte bei 25% Kompression nach dem 4. Zyklus von kleiner oder gleich 65 kPa aufweist, bestimmt gemäß Referenzbeispiel 5.

Gemäß einer Ausführungsform betrifft die vorliegende Erfindung auch einen Formkörper wie zuvor beschrieben, wobei der Schaum eine Stauchhärte bei 65% Kompression im Bereich von 300 bis 700 kPa aufweist, bestimmt nach dem 4. Zyklus gemäß Referenzbeispiel 5.

Gemäß einer Ausführungsform betrifft die vorliegende Erfindung auch einen Formkörper wie zuvor beschrieben, wobei der Schaum eine Stauchhärte bei 10% Kompression im Bereich von 1 bis 20 kPa aufweist, bestimmt nach dem 4. Zyklus gemäß Referenzbeispiel 5.

Erfindungsgemäß wurde gefunden, dass die Stauchhärte des Formkörpers durch die Kombination des G-Moduls des Schaums des eingesetzten thermoplastischen Elastomers (TPE-1) und der Einstellung der Dichte des Schaums in dem erfindungsgemäßen Bereich beeinflusst wird. Die Dichte des Schaums kann erfindungsgemäß beispielsweise durch geeignete Bedingungen bei der Herstellung des Schaums beeinflusst werden.

Ebenso ist es im Rahmen der vorliegenden Erfindung möglich, dass ein geschäumtes Granulat eingesetzt wird, das durch geeignete Maßnahmen fusioniert wird, wobei bei der Fusionierung eine geeignete Dichte des Schaums bzw. des Formkörpers eingestellt wird.

Erfindungsgemäß kann der Formkörper die Partikel des geschäumten Granulats in loser Form umfassen. Dabei kann der Formkörper beispielsweise eine geeignete Hülle umfassen, die im Wesentlichen die Form des Formkörpers bestimmt.

Gemäß einer Ausführungsform betrifft die vorliegende Erfindung auch einen Formkörper wie zuvor beschrieben, wobei der Formkörper eine Hülle und die Partikel des geschäumten Granulats umfasst.

Dabei kann das Material und die Form der Hülle im Rahmen der vorliegenden Erfindung in weiten Bereichen variieren, sofern die Hülle verschließbar ist und zur Bildung eines Formkörpers mit losen Partikeln des geschäumten Granulats geeignet ist.

Erfindungsgemäß können die Partikel des geschäumten Granulats beispielsweise verschweißt werden, um einen Schaum geeigneter Dichte zu bilden. Dabei ist es im Rahmen der vorliegenden Erfindung auch möglich, dass das geschäumte Granulat vor dem Verschweißen oder Verkleben einer Behandlung unterzogen wird, beispielsweise einer Temperaturbehandlung, einer Bestrahlung oder einer Behandlung mit einem Lösungsmittel.

Gemäß einer Ausführungsform betrifft die vorliegende Erfindung auch einen Formkörper wie zuvor beschrieben, wobei der Schaum aus verschweißten Partikeln besteht.

Erfindungsgemäß ist es auch möglich, dass ein geschäumtes Granulat in einer Matrix eingebettet wird und der Schaum ein Hybridschaum ist.

Gemäß einer Ausführungsform betrifft die vorliegende Erfindung auch einen Formkörper wie zuvor beschrieben, wobei der Schaum ein Hybridschaum umfassend ein geschäumtes Granulat aus einem thermoplastischen Elastomer (TPE-1) ist.

Materialien, die ein geschäumtes Granulat und ein Matrixmaterial umfassen, werden im Rahmen dieser Erfindung als Hybridmaterialien bezeichnet. Dabei kann das Matrixmaterial aus einem kompakten Werkstoff oder ebenfalls aus einem Schaumstoff bestehen.

Als Matrixmaterial geeignete Polymere (PM) sind dem Fachmann an sich bekannt. Geeignet sind im Rahmen der vorliegenden Erfindung beispielsweise Ethylen-Vinylacetat-Copolymere, Bindemittel auf Epoxid-Basis oder auch Polyurethane. Erfindungsgemäß geeignet sind dabei Polyurethan Schaumstoffe oder auch kompakte Polyurethane, wie beispielsweise elastische Polyurethane. Erfindungsgemäß können die als Matrixmaterial eingesetzten Polymere weitere Zusatzstoffe enthalten, beispielsweise übliche Hilfsstoffe wie beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Erfindungsgemäß wird das Polymer (PM) dabei so ausgewählt, dass eine ausreichende Haftung zwischen dem geschäumten Granulat und der Matrix gegeben ist um ein zumindest an der Oberfläche mechanisch stabiles Hybridmaterial zu erhalten.

Dabei kann die Matrix das geschäumte Granulat ganz oder teilweise umgeben. Erfindungsgemäß kann das Hybridmaterial weitere Komponenten enthalten, beispielsweise weitere Füllstoffe oder auch Granulate. Erfindungsgemäß kann das Hybridmaterial auch Mischungen verschiedener Polymere (PM) enthalten. Das Hybridmaterial kann auch Mischungen geschäumter Granulate enthalten.

Geschäumte Granulate, die neben dem geschäumten Granulat gemäß der vorliegenden Erfindung eingesetzt werden können, sind dem Fachmann an sich bekannt. Insbesondere geschäumte Granulate aus thermoplastischen Elastomeren, insbesondere thermoplastischen Polyurethanen sind im Rahmen der vorliegenden Erfindung geeignet.

Im Rahmen der vorliegenden Erfindung geeignet ist demgemäß auch ein Hybridmaterial, enthaltend eine Matrix aus einem Polymer (PM), ein geschäumtes Granulat aus einem thermoplastischen Elastomer (TPE-1) und ein weiteres geschäumtes Granulat aus einem thermoplastischen Polyurethan.

Die Matrix kann im Rahmen der vorliegenden Erfindung beispielsweise aus einem Polymer (PM) bestehen. Geeignet sind im Rahmen der vorliegenden Erfindung als Matrixmaterial beispielsweise Elastomere oder Schaumstoffe, insbesondere Schaumstoffe auf Basis von Polyurethanen, beispielsweise Elastomer wie Ethylen-Vinylacetat-Copolymere oder auch thermoplastische oder elastische Polyurethane.

Geeignete Matrixmaterialien sind dem Fachmann an sich bekannt. Beispielsweise können an sich bekannte Klebstoffsysteme auf Epoxy-Basis oder Polyurethanbasis eingesetzt werden.

Geeignete thermoplastische und elastische Polyurethane sind dem Fachmann an sich bekannt. Geeignete Polyurethane werden beispielsweise beschrieben in "Kunststoffhandbuch, Band 7, Polyurethane", Carl Hanser Verlag, 3. Auflage 1993, Kapitel 3.

Bevorzugt ist das Polymer (PM) im Rahmen der vorliegenden Erfindung ein Polyurethan. Polyurethan im Sinne der Erfindung umfasst alle bekannten Polyisocyanat-Polyadditionsprodukte. Diese umfassen insbesondere massive Polyisocyanat-Polyadditionsprodukte, wie viskoelastische Gele oder thermoplastische Polyurethane, und elastische Schaumstoffe auf Basis von Polyisocyanat-Polyadditionsprodukten, wie Weichschaumstoffe, Halbhartschaumstoffe oder Integralschaumstoffe. Weiter sind unter Polyurethanen im Sinne der Erfindung elastische Polymerblends, enthaltend Polyurethane und weitere Polymere, sowie Schaumstoffe aus diesen Polymerblends zu verstehen. Vorzugsweise handelt es sich bei der Matrix um ein gehärtetes, kompaktes Polyurethanbindemittel, einen elastischen Polyurethanschaumstoff oder ein Gel.

Unter einem Polyurethanbindemittel wird dabei im Rahmen der vorliegenden Erfindung eine Mischung verstanden, die zu mindestens 50 Gew.-%, vorzugsweise zu mindestens 80 Gew.-% und insbesondere zu mindestens 95 Gew.-% aus einem Isocyanatgruppen aufweisenden Präpolymer, im Folgenden als Isocyanatpräpolymer bezeichnet, besteht. Dabei liegt die Viskosität des erfindungsgemäßen Polyurethanbindemittels vorzugsweise in einem Bereich von 500 bis 4000 mPa.s, besonders bevorzugt von 1000 bis 3000 mPa.s, gemessen bei 25 °C nach DIN 53019-1:2008-09.

Im Rahmen der Erfindung geeignete Polyurethan-Schaumstoffe sind dem Fachmann an sich bekannt.

Die Dichte des Matrixmaterials liegt vorzugsweise im Bereich von 2 bis 0,001 g/cm$^3$. Besonders bevorzugt ist das Matrixmaterial ein elastischer Schaumstoff oder ein Integral-Schaumstoff mit einer Dichte im Bereich von 0,8 bis 0,1 g/cm$^3$, insbesondere von 0,6 bis 0,1 g/cm$^3$ oder kompaktes Material, beispielsweise ein gehärtetes Polyurethanbindemittel.

Insbesondere Schaumstoffe sind als Matrixmaterial geeignet. Hybridmaterialien, die ein Matrixmaterial aus einem Polyurethan Schaumstoff enthalten, weisen vorzugsweise eine gute Haftung zwischen Matrixmaterial und geschäumtem Granulat auf.

Ein erfindungsgemäß geeignetes Hybridmaterial, enthaltend ein Polymer (PM) als Matrix und ein geschäumtes Granulat kann beispielsweise hergestellt werden, indem die zur Herstellung des Polymers (PM) eingesetzten Komponenten und das geschäumte Granulat gegebenenfalls mit weiteren Komponenten vermischt und zum Hybridmaterial umgesetzt werden, wobei die Umsetzung vorzugsweise unter Bedingungen erfolgt, unter denen das geschäumte Granulat im Wesentlichen stabil ist.

Geeignete Verfahren und Reaktionsbedingungen zur Herstellung des Polymers (PM), insbesondere eines Ethylen-Vinylacetat-Copolymers oder eines Polyurethans sind dem Fachmann an sich bekannt.

In einer bevorzugten Ausführungsform stellen die erfindungsgemäß geeigneten Hybridmaterialien Integralschaumstoffe, insbesondere Integralschaumstoffe auf Basis von Polyurethanen dar. Geeignete Verfahren zur Herstellung von Integralschaumstoffen sind dem Fachmann an sich bekannt. Die Integralschaumstoffe werden vorzugsweise nach dem oneshot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff, Carl-Hanser-Verlag, München, Wien, 1975, oder im Kunststoff-Handbuch, Band 7, Polyurethane, 3. Auflage, 1993, Kapitel 7.

Somit ist es möglich, Hybridmaterialien mit einer Matrix aus einem Polymer (PM) und darin enthaltenen dem erfindungsgemäßen geschäumten Granulat herzustellen. Das erfindungsgemäße geschäumte Granulat kann leicht in einem Verfahren zur Herstellung eines Hybridmaterials eingesetzt werden, beispielsweise durch Formpressen.

In einem erfindungsgemäß geeigneten Hybridmaterial beträgt der Volumenanteil des geschäumten Granulats vorzugsweise 20 Volumenprozent und mehr, besonders bevorzugt 50 Volumenprozent und mehr bevorzugt 80 Volumenprozent und mehr und insbesondere 90 Volumenprozent und mehr, jeweils bezogen auf das Volumen des Hybridsystems.

Die im Rahmen der vorliegenden Erfindung als Schaum geeigneten Hybridmaterialien, insbesondere Hybridmaterialien mit einer Matrix aus zelligem Polyurethan, zeichnen sich durch eine sehr gute Haftung des Matrixmaterials mit dem erfindungsgemäßen geschäumten Granulat aus. Dabei reißt ein erfindungsgemäßes Hybridmaterial vorzugsweise nicht an der Grenzfläche von Matrixmaterial und geschäumtem Granulat. Dadurch ist es möglich, Hybridmaterialien herzustellen, die gegenüber konventionellen Polymermaterialien, insbesondere konventionellen Polyurethanmaterialien bei gleicher Dichte verbesserte mechanische Eigenschaften, wie Weiterreißfestigkeit und Elastizität haben.

Die Rückprallelastizität erfindungsgemäßer Hybridmaterialien in Form von Integralschaumstoffen ist vorzugsweise grösser 30 % und besonders bevorzugt grösser 50 % nach DIN53512:2000-04.

Die Eigenschaften der Hybridmaterialien können abhängig vom eingesetzten Polymer (PM) in weiten Bereichen variieren und lassen sich insbesondere durch eine Variation von Größe, Gestalt und Beschaffenheit des expandierten Granulats, oder auch die Zugabe weiterer Zusatzstoffe, beispielsweise auch weiterer nicht geschäumter Granulate wie Kunststoffgranulate, beispielsweise Gummigranulat, in weiten Grenzen einstellen.

Gemäß einem weiteren Aspekt betrifft die vorliegende Erfindung auch ein Verfahren zur Herstellung eines Formkörpers umfassend die Schritte

> (i) Bereitstellen eines Schaums aus einem thermoplastischen Elastomer (TPE-1), wobei der Schaum einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, wobei der Schaum einen Komfort-Faktor von größer als 4 aufweist, bestimmt gemäß Referenzbeispiel 3;
> (ii) Verarbeitung des Schaums zu einem Formkörper.

Bezüglich bevorzugter Ausführungsformen wird auf die obigen Ausführungen verwiesen.

Im Rahmen der vorliegenden Erfindung umfasst das erfindungsgemäße Verfahren die Schritte (i) und (ii). Dabei kann der gemäß Schritt (i) bereitgestellte Schaum aus einem thermoplastischen Elastomer (TPE-1) ein Blockschaum oder auch ein geschäumtes Granulat sein. Erfindungsgemäß ist es auch möglich, dass der Schaum vor dem Bereitstellen gemäß Schritt (i) bearbeitet wird. Im Rahmen der vorliegenden Erfindung kann der Schaum beispielsweise auch ein verschweißtes oder verklebtes geschäumtes Granulat sein oder auch ein in einem Matrix-Schaum bzw. einem Matrix-Polymer eingebettetes geschäumtes Granulat. So ist es im Rahmen der vorliegenden Erfindung beispielsweise auch möglich, dass zunächst ein Schaum aus einem thermoplastischen Elastomer (TPE-1) eingesetzte wird, der eine Dichte und/oder ein G-Modul und/oder einen Komfort Faktor außerhalb des erfindungsgemäßen Bereichs aufweist, und die Dichte, das G-Modul und der Komfort Faktor durch eine geeignete Behandlung eingestellt wird.

Gemäß einer Ausführungsform betrifft die vorliegende Erfindung auch ein Verfahren zur Herstellung eines Formkörpers wie zuvor beschrieben, wobei der Schaum ein geschäumtes Granulat ist.

Die vorliegende Erfindung betrifft auch ein Verfahren zur Herstellung eines Formkörpers umfassend die Schritte

(i) Bereitstellen eines Schaums aus einem thermoplastischen Elastomer (TPE-1), wobei der Schaum einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, wobei der Schaum ein geschäumtes Granulat ist;
(ii) Verarbeitung des Schaums zu einem Formkörper.

Geeignete Verfahren zur Herstellung eines Formkörpers aus einem geschäumten Granulat sind dem Fachmann an sich bekannt.

Sofern der Formkörper eine Hülle und die Partikel des geschäumten Granulats in loser Form umfasst, kann gemäß Schritt (ii) beispielsweise die Hülle befüllt werden, um den Formkörper zu bilden. Geeignete Maßnahmen zum Befüllen einer Hülle mit einem geschäumten Granulat sind dem Fachmann an sich bekannt. Beispielsweise kann das Füllen der Hülle durch Schütten, Schichten, Schieben, Pressen, Roboterpositionieren, Schleudern oder Einsaugen erfolgen.

Im Rahmen der vorliegenden Erfindung ist es auch möglich, dass Schritt (i) und Schritt (ii) des Verfahrens gleichzeitig ausgeführt werden, dass also beispielsweise zunächst ein geschäumtes Granulat gemäß Schritt (i) bereitgestellt wird, dass dann gemäß Schritt (ii) durch Verschweißen, Verkleben oder Umschäumen zu einem Formkörper verarbeitet wird.

Gemäß einer Ausführungsform betrifft die vorliegende Erfindung auch ein Verfahren wie zuvor beschrieben, wobei die Verarbeitung gemäß Schritt (ii) mittels Verschweißen, Umschäumen oder Verkleben der Partikel des geschäumten Granulats erfolgt.

Erfindungsgemäß wird der Formkörper beispielsweise hergestellt, indem zunächst eine Form bereitgestellt wird und dann das geschäumte Granulat in die Form eingefüllt wird. Die Menge des eingefüllten geschäumten Granulats wird dabei an die Größe der Form und die gewünschte Formteildichte angepasst. Im Rahmen der vorliegenden Erfindung kann das Verfahren auch weitere Schritte umfassen, beispielsweise Temperaturanpassungen. Im Rahmen der vorliegenden Erfindung kann der Formkörper auch weitere Komponenten umfassen. Demgemäß können bei der Herstellung weitere Formteile oder geschäumte Partikel aus einem anderen Material verwendet werden.

Die Verarbeitung gemäß Schritt (ii) erfolgt vorzugsweise in einer geschlossenen Form, wobei die Fusionierung durch Wasserdampf, Heißluft (wie z.B. in der EP1979401B1 beschrieben), variothermes Verschweißen oder energetische Strahlung (z.B. Mikrowellen oder Radiowellen) erfolgen kann.

Die Temperatur bei dem Fusionieren des geschäumten Granulates liegt bevorzugt unterhalb oder nahe an der Schmelztemperatur des Polymers aus dem das geschäumte Granulat hergestellt wurde.

Die Verschweißung über energetische Strahlung erfolgt im Allgemeinen im Frequenzbereich von Mikrowellen oder Radiowellen, ggf. in Gegenwart von Wasser oder anderen polaren Flüssigkeiten, wie z.B. polare Gruppen aufweisende, mikrowellenabsorbierende Kohlenwasserstoffe (wie z.B. Ester von Carbonsäuren und Diolen oder Triolen oder Glycole und flüssige Polyethylenegklycole) und kann in Analogie zu den in der EP3053732A oder WO16146537 beschriebenen Verfahren erfolgen.

Beispielsweise wird der Formkörper durch Verschweißen bei einer Temperatur im Bereich von 100 bis 170 °C hergestellt. Die Temperatur bei dem Verschweißen der expandierten Partikel liegt bevorzugt zwischen 100°C und 140°C.

Dabei kann das Verschweißen beispielsweise erfolgen indem die Komponenten in einer geschlossenen Form unter Wärmeeinwirkung und gegebenenfalls unter Druck miteinander verschweißt werden. Dazu füllt man die Komponenten, also mindestens das geschäumte Granulat in die Form und leitet nach Schließen der Form Wasserdampf oder Heißluft ein, wodurch die Partikel des geschäumten Granulats weiter expandieren und miteinander zum Schaumstoff verschweißen. Erfindungsgemäß ist es je nach Dicke des Bauteils auch möglich, eine Form von außen mit einem Heizmedium, wie beispielsweise. Wasser oder Öl, zu temperieren, um die Partikel zu verschweißen.

Das erfindungsgemäße Verfahren kann weitere Schritte umfassen, beispielsweise Temperaturanpassungen.

Hierbei sind weitere Ausführungsformen nach gängigen Methoden möglich, wobei die bei der Herstellung der Ausgangsmaterialien verwendeten Prozesse mit in die Herstellung direkt einbezogen werden können.

Weiter betrifft die vorliegende Erfindung einen Formkörper, erhalten oder erhältlich gemäß einem Verfahren wie zuvor beschrieben.

Die erfindungsgemäßen Formkörper eignen sich insbesondere als Polsterelemente. Weiterhin geeignet sind die erfindungsgemäßen Formkörper als Schuhsohle, Teil einer Schuhsohle, Fahrradsattel, Polsterung, Matratze, Kissen, Rückenlehne, Armpolster, Auflage, Unterlage, Griff, Schutzfolie, Protektoren, Dämpfungselement oder als Bauteil im Automobilinnen- und - außenbereich.

Gemäß einer weiteren Ausführungsform betrifft die vorliegende Erfindung demgemäß auch einen Formkörper wie zuvor beschrieben, wobei der Formkörper eine Schuhsohle, ein Teil einer Schuhsohle, ein Fahrradsattel, eine Polsterung, eine Matratze, Kissen, Rückenlehne, Armpolster, Auflage, Unterlage, Griff, Schutzfolie, Protektoren, Dämpfungselement, ein Bauteil im Automobilinnen- und -außenbereich ist.

Gemäß einem weiteren Aspekt betrifft die vorliegende Erfindung auch die Verwendung eines erfindungsgemäßen Formkörpers zur Herstellung von Böden, Matratzen, Sitzmöbeln, eines Fahrradsattels, von Autositzen, Motorradsitze, Bauteilen eines Schuhs, als Schuheinleger, Verpackung, Stoßdämpfer.

Kurze Beschreibung der Figuren

Fig.1    zeigt eine schematische Darstellung der Spannungs-Dehnungskurven eines erfindungsgemäßen Beispiels im Vergleich zu einem Vergleichsbeispiel. Dabei ist die Kraft (y-Achse) über dem Weg (%, x-Achse) aufgetragen.

Die nachfolgenden Beispiele dienen der Veranschaulichung der Erfindung, sind aber in keiner Weise einschränkend hinsichtlich des Gegenstands der vorliegenden Erfindung.

Beispiele

I. Herstellbeispiele

**1. Herstellung der Beispiel- und Vergleichsmaterialien**

Die Herstellung der nachfolgend aufgeführten Beispielmaterialien TPU 1 bis 4 erfolgte in einem Zweiwellenextruder, ZSK58 MC, der Fa. Coperion mit einer Verfahrenslänge von 48D (12 Gehäuse).

Der Schmelzeaustrag aus dem Extruder erfolgte mittels Zahnradpumpe. Nach der Schmelzfiltration wurde die Polymerschmelze mittels Unterwassergranulierung zu Granulaten verarbeitet, welche kontinuierlich in einem Heizwirbelbett, bei 40 - 90 °C, getrocknet wurden.

Das Polyol, der Kettenverlängerer und das Diisocyanat sowie ggf. ein Katalysator wurden in die erste Zone dosiert. Die Zuführung weiterer Additive erfolgte in Zone 8.

Die Gehäusetemperaturen liegen im Bereich 150 - 230 °C. Der Schmelzeaustrag in die Unterwassergranulierung erfolgt mit Schmelzetemperaturen von 180 - 210 °C. Die Schneckendrehzahl beträgt zwischen 180 und 240 1/min. Der Durchsatz liegt im Bereich von 180 - 220 kg/h.

Die eingesetzten Mengen der Einsatzstoffe zur Herstellung der Beispielmaterialien sind in der Tabelle 1 zusammengefasst.

Tabelle 1: Zusammensetzung der verwendeten Materialiens

| Einsatzstoffe | TPU 1 | TPU 2 | TPU 3 | TPU 4 | TPU 5 |
|---|---|---|---|---|---|
| Polyetherpolyol mit einer OH-Zahl von 112,2 und ausschließlich primären OH- Gruppen (basierend auf Tetramethylenoxid, Funktionalität: 2) [Gewichtsteile] | 1000 | | 1000 | 1000 | 1000 |
| Polyesterpolyol mit einer OH-Zahl von 56 und ausschließlich primären OH-Gruppen (basierend auf 1,2-Ethandiol und 1,4-Butandiol im Verhältnis 1:1 und Adipinsäure, Funktionalität: 2) [Gewichtsteile] [Gewichtsteile] | | 1000 | | | |
| aromatisches Isocyanat (4,4' Methylendiphenyldiisocyanat) [Gewichtsteile] | 455,5 | 260 | 500 | 630 | 503 |
| 1,4-Butandiol [Gewichtsteile] | | | 89,9 | 136,74 | 91,1 |
| Monoethylenglykol [Gewichtsteile] | 51,03 | 32,23 | | | |

(fortgesetzt)

| Einsatzstoffe | TPU 1 | TPU 2 | TPU 3 | TPU 4 | TPU 5 |
|---|---|---|---|---|---|
| Acetyltributylcitrat [Gewichtsteile] | 382,86 | 231,17 | | | |
| Sterisch gehindertes Amin als Lichtstabilisator (HALS) [Gewichtsteile] | 3,83 | | 3,28 | | 3,28 |
| Phenol-basiertes, primäres Antioxidanz [Gewichtstei le] | 9,57 | 13,08 | 16,1 | 17,85 | 16,4 |
| Wachs auf Basis von Distearylethylendiamid [Gewichtstei le] | 5,74 | 4,62 | 0,4 | 0,89 | 1,64 |
| Oxalanilid basierter UV-Absorber [Gewichtstei le] | 5,74 | | 4,93 | | 4,93 |
| Carbodiimid basiertes Hydrolyseschutzmittel [Gewichtsteile] | | 10 | | | |
| Zinn-II-isooctoat (50 %ig in Dioktyladipat) [Gewichtsteile] | 50 ppm | 50 ppm | 50 ppm | 50 ppm | 50 ppm |

Durch diese Mischung und Synthese werden thermoplastische Polyurethane mit den in Tabelle 2 aufgelisteten Eigenschaften hergestellt. Dabei wurde der Speicher-Modul (G-Modul) entsprechend Referenzbeispiel 1 (kompaktes Grnulat) bestimmt. Die Schmelze-Massefließrate (melt flow rate, MFR) wurde an den Granulaten nach DIN EN ISO 1133-2:2012 gemessen. Die verwendeten Bedingungen sind in Tabelle 2 aufgeführt.

Tabelle 2: Eigenschaften der hergestellten kompakten Beispielmaterialien

| | G-Modul bei 25 °C | MFR (190°C, 3,8kg) DIN EN ISO 1133-2:2012 | MFR (190°C, 21,6kg) DIN EN ISO 1133-2:2012 |
|---|---|---|---|
| TPU 1 | 1,9 MPa | 28 | |
| TPU 2 | 1,3 MPa | 145 | |
| TPU 3 | 7,3 MPa | | 31 |
| TPU 4 | 9,5 MPa | | 76 |
| TPU 5 | 8,3 MPa | | 38 |

## 2. Allgemeine Herstellvorschrift der Beispiele und Vergleichsbeispiele nach dem Extrusionsverfahren

Nach der Herstellung der Einsatzstoffe wurden diese wie folgt zu expandierten thermoplastischen Polyurethangranulaten weiterverarbeitet. Hierzu wurden die getrockneten TPUs in einem Doppelschneckenextruder (ZSK 40, Coperion) mit weiteren Additiven 0,2 % Talkum (Korngröße 5,6 $\mu$m - D50, Volumenverteilung) als Nukleierungsmittel, gegebenenfalls einem TPU, welches in einem separaten Extrusionsprozess mit 4,4-Diphenylmethandiisocyanat mit einer mittleren Funktionalität von 2,05 versetzt wurde (Zusatzstoff 1), und gegebenenfalls mit Triacetin als Weichmacher (Zusatzstoff 2) und gegebenenfalls mit einem Polystyrol (melt flow rate, 200 °C/5 kg: 3 g/10 min) (Zusatzsoff 3) gemischt und in einem Temperaturbereich von 130 bis 220 °C aufgeschmolzen. Als Treibmittel wurden $CO_2$ und $N_2$ im Extruder in die Schmelze injiziert und mit dem thermoplastischen Polyurethan und den weiteren Additiven zu einer homogenen Schmelze vermischt. Die Zusammensetzung der einzelnen Beispiele und Vergleichsbeispiele ist in Tabelle 3 aufgelistet. Das Material wurde anschließend über eine Zahnradpumpe (ca. 130 - 200 °C je nach Materialzusammensetzung) in eine Lochplatte (130 - 200 °C je nach Materialzusammensetzung) gedrückt und in der Schneidkammer der Unterwassergranulierung (UWG) zu Granulaten geschnitten und mit dem temperierten und unter Druck stehenden Wasser abtransportiert und dabei expandiert. Nach der Abscheidung der expandierten Granulate aus dem Wasser mittels eines Zentrifugaltrockner werden die expandierten Granulate bei 50 - 60 °C für 2 h getrocknet. Die für die einzelnen Beispiele und Vergleichsbeispiele verwendete Wassertemperatur und der Wasserdruck, die Menge an $CO_2$ und $N_2$ sowie Parti-kelmasse und die resultierende Schüttdichte entsprechend Referenzbeispiel 4 sind in Tabelle 3 aufgelistet.
Die Herstellung des geschäumten Granulats erfolgte nach dem Autoklav-Verfahren, einem gängigen im Stand der Technik bekannten Verfahren durch

(i) Bereitstellen einer erfindungsgemäßen TPU-Zusammensetzung;
(ii) Imprägnierung der Zusammensetzung mit einem Treibmittel unter Druck;

(iii) Expandieren der Zusammensetzung mittels Druckabfall.

Die Treibmittelmenge beträgt bevorzugt 0,1 bis 40, insbesondere 0,5 bis 35 und besonders bevorzugt 1 bis 30 Gew.-Teile, bezogen auf 100 Gew.-Teile der eingesetzten Menge der Zusammensetzung (Z).

Hierbei kann die Imprägnierung in Schritt (ii) in Gegenwart von Wasser sowie optional Suspensionshilfsmitteln erfolgen oder nur in Anwesenheit des Treibmittels und Abwesenheit von Wasser.

Die Durchführung des Verfahrens in Suspension ist dem Fachmann bekannt und z.B. ausführlich in der WO2007/082838 beschrieben.

## 3. Allgemeine Herstellvorschrift der Beispiele und Vergleichsbeispiele nach dem Autoklav-Verfahren (Kesselverfahren)

100,0 Gewichtsteile (entsprechend 27,5 Gew.-%, bezogen auf die gesamte Suspension ohne Treibmittel) des Granulats, 257 Gewichtsteile (entsprechend 70,6 Gew.-%, bezogen auf die gesamte Suspension ohne Treibmittel) Wasser, 6,7 Gewichtsteile (entsprechend 1,8 Gew.-%, bezogen auf die gesamte Suspension ohne Treibmittel) Calciumcarbonat (Suspendiermittel), 0,13 Gewichtsteile (entsprechend 0,04 Gew.-%, bezogen auf die gesamte Suspension ohne Treibmittel) einer oberflächenaktiven Substanz (Lutensol AT 25; Suspendierhilfsmittel) und die entsprechende Menge Butan als Treibmittel (bezogen auf die eingesetzte Granulatmenge) wurden unter Rühren erhitzt. //

Dann wurde bei 50 °C der Flüssigphase zusätzlich Stickstoff aufgepresst und der Innendruck auf einen vorher definierten Druck (800 kPa) eingestellt. Anschließend wird bei Erreichen der Imprägniertemperatur (IMT) und gegebenenfalls nach Einhaltung einer Haltezeit (HZ) und bei dem sich am Ende eingestellten Imprägnierdruck (IMP) über eine Entspannungsvorrichtung entspannt. Der Gasraum wird hierbei auf einen festgelegten Auspressdruck (AP) eingestellt und während der Entspannung konstant gehalten. Der Entspannungsstrahl kann nach der Entspannungseinrichtung gegebenenfalls noch mit einem bestimmten Volumenstrom von Wasser mit einer bestimmten Temperatur gekühlt werden (Wasserquench).

Als Haltezeit wird die Zeit definiert, bei der sich die Temperatur der Flüssigphase in einem Temperaturbereich von 5 °C unter der Imprägniertemperatur und 2 °C über der Imprägniertemperatur befindet.

Nach Entfernung des Suspendiermittels/Suspendierhilfsmittel-Systems (Dispergiermittel / Tensid) und der Trocknung, wird die Schüttdichte (SD) der resultierenden Schaumstoffpartikel gemäß Referenzbeispiel 4 gemessen.

Die genauen Herstellparameter und die Schüttdichte der resultierenden Chargen sind in Tabelle 4 aufgeführt.

Tabelle 3a und 3b: Daten zu den Beispielen und Verleichsbeisielen Extrusionsverfahren

| eTPU Perlen | Eingesetztes TPU | Anteil des Bsp.m. | Anteil des Zusatzstoff | Anteil des Zusatzstoff | Anteil des Zusatzstoff | Part.-Mas. (mg) |
|---|---|---|---|---|---|---|
| | | (Gew.%) | 1 (Gew. %) | 2 (Gew. %) | 3 (Gew. %) | |
| Bsp. 1 | TPU 1 | 98,8 | 1,0 | - | - | 23 |
| Bsp. 2 | TPU 1 | 99,3 | 0,5 | - | - | 23 |
| Bsp. 3 | TPU 1 | 98,3 | 1,5 | - | - | 24 |
| Bsp. 4 | TPU 1 | 98,8 | 1,0 | - | - | 23 |
| Bsp. 5 | TPU 1 | 93,8 | 1,0 | 5,0 | - | 23 |
| Bsp. 6 | TPU 2 | 95,8 | 4,0 | - | - | 23 |
| Vergl. Bsp. 1 | TPU 3 | 99,4 | 0,6 | - | - | 32 |
| Vergl. Bsp. 2 | TPU 4 | 88,6 | 0,6 | - | 10 | 32 |

| eTPU Perlen | Schüttdichte nach 10 Tagen (g/l) | $CO_2$ (Gew. %) | $N_2$ (Gew. %) | Wasserdruck in der UWG (bar) | Wassertemperatur in der UWG (°C) |
|---|---|---|---|---|---|
| Bsp. 1 | 168 | 1,4 | 0,21 | 9,4 | 37 |

(fortgesetzt)

| eTPU Perlen | Schüttdichte nach 10 Tagen (g/l) | $CO_2$ (Gew. %) | $N_2$ (Gew. %) | Wasserdruck in der UWG (bar) | Wassertemperatur in der UWG (°C) |
|---|---|---|---|---|---|
| Bsp. 2 | 175 | 1,4 | 0,21 | 9,4 | 38 |
| Bsp. 3 | 169 | 1,4 | 0,21 | 9,4 | 37 |
| Bsp. 4 | 160 | 1,4 | 0,21 | 9,4 | 40 |
| Bsp. 5 | 160 | 1,4 | 0,21 | 9,4 | 36 |
| Bsp. 6 | 117 | 1,0 | 0,21 | 9,4 | 36 |
| Vergl. Bsp. 1 | 161 | 1,5 | 0,1 | 7,1 | 40 |
| Vergl. Bsp. 2 | 196 | 1,5 | 0,15 | 7,1 | 43 |

Tabelle 4: Daten zu den Beispielen und Vergleichsbeispielen (Autoklavverfahren)

| eTPU | Einge-setztes TPU | Partikel masse (mg) | Schüttdichte nach 10 Tagen (g/l) | Butan (Gew.-%) | $N_2$-Auf-pressdruck bei 50°C (bar) | Haltezeit (min) | Imprägniertemperatur (°C) | Imprä gnierdruck (bar) | Auspressdruck (bar) | Wasserquench |
|---|---|---|---|---|---|---|---|---|---|---|
| Bsp. 7 | TPU 3 | 16 | 82 | 24 | 8 | 3 | 114 | 23,2 | 34 | ja |
| Bsp. 8 | TPU 5 | 35 | 70 | 24 | 8 | 10 | 123 | 27 | 34 | nein |
| Vergl. Bsp. 3 | TPU 5 | 32 | 112 | 24 | 8 | 3 | 126 | 29,4 | 34 | ja |

Die expandierten Granulate, hergestellt im Extrusionsverfahren wie auch Kesselverfahren, wurden anschließend auf einem Formteilautomaten der Fa. Kurtz ersa GmbH (Energy Foamer K68) zu quadratischen Platten mit einer Seitenlänge von 200 mm und einer Dicke von 20 mm durch Beaufschlagung mit Wasserdampf verschweißt. Die Verschweißungsparameter der unterschiedlichen Beispiele und Vergleichsbeispiele werden so gewählt, dass die Oberflächen des finalen Formteilseine möglichst geringe Anzahl an kollabierten eTPU Partikeln aufweisen. Bei jedem Versuch wurde am Ende immer eine Kühlzeit von 120 s von der festen und der beweglichen Seite des Werkzeugs eingestellt. Die jeweiligen Bedampfungsbedingungen sind in Tabelle 5 über die Dampfdrücke und die jeweilige Bedampfungsdauer aufgelistet. Die erhaltenen Platten wurden für 4 h bei 70 °C getempert.

Tabelle 5a und 5b: Dampfüberdrücke und Zeiten zur Verschweißung der Materialien der Beispiele und Vergleichsbeispiele

| Bauteil | Eingesetztes eTPU | Spalt (mm) | Spaltbedampfung feste Seite (bar) | Spaltbedampfung feste Seite (s) | Spaltbedampfung bewegliche Seite (bar) | Spaltbedampfung bewegliche Seite (s) |
|---|---|---|---|---|---|---|
| Bsp. 9 | Bsp. 1 | 22 | - | - | 0,4 | 18 |
| Bsp. 10 | Bsp. 2 | 22 | - | - | 0,5 | 15 |
| Bsp. 11 | Bsp. 3 | 22 | - | - | 0,75 | 18 |
| Bsp. 12 | Bsp. 4 | 22 | - | - | 0,5 | 15 |
| Bsp. 13 | Bsp. 5 | 22 | - | - | 0,2 | 18 |
| Bsp. 14 | Bsp. 6 | 22 | 0,8 | 20 | 0,8 | 20 |
| Bsp. 15 | Bsp. 7 | 10 | - | - | - | - |
| Bsp. 16 | Bsp. 8 | 22 | - | - | - | - |
| Vergl. Bsp. 4 | Vergl. Bsp. 1 | 22 | - | - | 0,9 | 18 |
| Vergl. Bsp. 5 | Bsp. 7 | 24 | - | - | - | - |
| Vergl. Bsp. 6 | Vergl. Bsp. 3 | 22 | - | - | - | - |
| Vergl. Bsp. 7 | Vergl. Bsp. 2 | 22 | - | - | - | - |

| Bauteil | Quer-dampf feste Seite/ Gegendruck (bar) | Quer-dampf feste Seite/ Gegendruck (s) | Quer-dampf beweg-liche Seite/ Gegendruck (bar) | Quer-dampf beweg-liche Seite/ Gegendruck (s) | Autoklavdampf feste / bewegli-che Seit (bar) | Autoklavdampf (s) |
|---|---|---|---|---|---|---|
| Bsp. 9 | 0,4 | 10 | - | - | 0,5 / 0,5 | 10 |
| Bsp. 10 | 0,5 | 15 | - | - | 0,5 / 0,5 | 10 |
| Bsp. 11 | 0,8 | 15 | - | - | 0,8 / 0,8 | 10 |
| Bsp. 12 | 0,4 | 10 | - | - | 0,4 / 0,4 | 10 |
| Bsp. 13 | - | - | - | - | 0,4 / 0,4 | 10 |
| Bsp. 14 | 0,9 | 20 | - | - | 0,9 / 0,9 | 10 |
| Bsp. 15 | 0,8/0,8 | 30/20 | - | - | 0,5/0,5 | 15 |
| Bsp. 16 | 1,3/1,2 | 30/25 | 1,3/1,2 | 30/25 | 1,8/1,8 | 40 |
| Vergl. Bsp. 4 | 1,3 | 30 | 1,3 | 30 | 1,3/0,8 | 10 |
| Vergl. Bsp. 5 | 1/0,8 | 30/20 | - | - | 0,6/0,6 | 15 |
| Vergl. Bsp. 6 | 1/0,9 | 40/30 | 0,7/0,6 | 40/30 | 1,8/1,8 | 40 |
| Vergl. Bsp. 7 | 0,8/0,7 | 20/25 | 0,8/0,7 | 20/25 | 1,95/1,05 | 60 |

Die Bestimmung des G-Moduls der verschweißten Formteile erfolgt entsprechend Referenzbeispiel 1 (TPE Formteil). Die Ergebnisse sind in Tabelle 6 zusammengefasst.

Die Bestimmung des G-Moduls von einzelnen, losen Schaumpartikeln (Beispiel 1 bis 8) erfolgte entsprechend Referenzbeispiel 1(geschäumtes Granulat) und ist in Tabelle 6 zusammengefasst.

Tabelle 6: G-Modul (Speicher-Modul) gemessen bei 25 °C und 1 Hz

| Beispiele | G-Modul bei 25 °C [MPa] |
|---|---|
| Bsp. 1 bis 8 | < 0,5 |
| Bsp. 9 | 0,21 |
| Bsp. 10 | 0,19 |
| Bsp. 11 | 0,22 |
| Bsp. 12 | 0,20 |
| Bsp. 13 | 0,17 |
| Bsp. 14 | 0,11 |
| Bsp. 16 | 0,45 |
| Vergl. Bsp. 4 | 0,52 |
| Vergl. Bsp. 5 | 0,60 |
| Vergl. Bsp. 6 | 0,72 |
| Vergl. Bsp 7 | 1,67 |

Für die Bewertung des Komforts von Sitzmöbeln und Matratzen wird häufig der SAG-Faktor (bestimmt nach DIN EN ISO 2439:2009-05) herangezogen. Der SAG-Faktor berechnet sich aus dem Quotienten der Eindruckhärte bei einem Eindrückweg von 65 % zu der Eindruckhärte bei einem Eindrückweg von 25 % mit einem Stempel, der von der Fläche kleiner ist als der Probenkörper. In Abwandlung zur Norm erfolgte die Bewertung der unterschiedlichen Beispiele und Vergleichsbeispiele anhand einer StauchhärteBestimmung zur Ermittlung eines Komfort-Faktors entsprechend Referenzbeispiel 3.

Die Bestimmung der Formteildichte erfolgte entsprechend Referenzbeispiel 2.

Die Bestimmung der Stauchhärte erfolgte entsprechend Referenzbeispiel 5.

Die Ergebnisse der Stauchhärteprüfung für die Beispiele und Vergleichsbeispiele sind in den Tabellen 7 und 8 zusammengefasst. Dabei werden in Tabelle 7 die Stauchhärten aus dem 1. Zyklus und in Tabelle 8 die Werte aus unterschiedlichen Zyklen dargestellt. Die Angabe des Zyklus ist dahingehend von Bedeutung als, dass sich eTPU durch die erste Kompression verändert. Dadurch sind die Stauchhärten, die im nachfolgenden Zyklus gemessen werden deutlich kleiner. Ab spätestens dem 4. Zyklus ist die Änderung deutlich geringer ausgeprägt, was exemplarisch anhand eines Beispiels in Tabelle 8 gezeigt wird. Die Messungen der 4 Zyklen wurden an Bauteilen, hergestellt aus eTPU von Vergleichsbeispiel 1, durchgeführt.

Tabelle 7: Ergebnisse der Stauchhärteprüfung (1. Zyklus) der verschweißten Platten der Beispiele und Vergleichsbeispiele

| Name | Prüfkörperdichte (kg/m$^3$) | Stauchhärte 10% (kPa) | Stauchhärte 25% (kPa) | Stauchhärte 50% (kPa) | Stauchhärte 65% (kPa) | Stauchhärte 75% (kPa) | StH 65%/ StH25% (kPa/ kPa ) |
|---|---|---|---|---|---|---|---|
| Bsp. 9 | 336 | 14 | 55 | 220 | 587 | 2018 | 10,7 |
| Bsp. 10 | 332 | 17 | 59 | 214 | 573 | 1967 | 9,7 |
| Bsp. 11 | 341 | 17 | 61 | 234 | 649 | 2423 | 10,6 |
| Bsp. 12 | 323 | 15 | 55 | 207 | 540 | 1785 | 9,8 |
| Bsp. 13 | 301 | 12 | 45 | 171 | 437 | 1306 | 9,7 |
| Bsp. 14 | 281 | 7 | 31 | 122 | 307 | 790 | 9,9 |
| Bsp. 15 | 182 | 28 | 72 | 180 | 363 | 809 | 5,0 |
| Bsp. 16 | 143 | 26 | 67 | 160 | 305 | 591 | 4,5 |
| Vergl. Bsp. 4 | 274 | 30 | 90 | 302 | 781 | 2438 | 8,7 |
| Vergl. Bsp. 5 | 238 | 53 | 127 | 292 | 619 | 1610 | 4,9 |
| Vergl. Bsp-6 | 236 | 77 | 156 | 330 | 652 | 1473 | 4,2 |
| Vergl. Bsp. 7 | 369 | 167 | 415 | 1241 | 4134 | 19230 | 10,0 |

Tabelle 8: Ergebnisse der Stauchhärteprüfung (für unterschiedliche Zyklen) der verschweißten Platten der Beispiele und Vergleichsbeispiele Name

| Name | Prüfkörperdichte (kg/m$^3$) | Zyklus (-) | Stauchhärte 10% (kPa) | Stauchhärte 25% (kPa) | Stauchhärte 50% (kPa) | Stauchhärte 65% (kPa) | Stauchhärte 75% (kPa) | StH 65%/ StH 25% (kPa/kPa) |
|---|---|---|---|---|---|---|---|---|
| Bsp. 15 | 182 | 4 | 17 | 56 | 152 | 325 | 772 | 5,8 |
| Vergl. Bsp. 5 | 238 | 1 | 54 | 127 | 292 | 619 | 1608 | 4,9 |
| | | 2 | 37 | 103 | 256 | 563 | 1542 | 5,4 |
| | | 3 | 34 | 100 | 250 | 550 | 1528 | 5,5 |
| | | 4 | 33 | 98 | 247 | 544 | 1517 | 5,6 |
| | | | | | | | | |
| Vergl. Bsp. 6 | 236 | 4 | 42 | 114 | 274 | 572 | 1410 | 5,0 |

EP 4 058 510 B1

Bestimmung des G-Moduls an rekompaktierten TPU aus expandierten TPU erfolgte entsprechend Referenzbeispiel 6 (Herstellung der Spritzgussplatten) und Referenzbeispiel 1 (Bestimmung des G-Moduls (kompaktes Material)).

**4. Beispiele zur Herstellung von Hybridmaterialien aus Blockschaum (Binder) und eTPU (Beispiele 17 bis 22)**

Aus den oben hergestellten Partikeln wurden mittels PU-Schaumsystem als Binder Formteile hergestellt. Hierzu wurde zunächst die Flüssigrezepturkomponenten gemäß Rezeptur der A-Komponente (Tabelle 10) angesetzt und dann mit der B-Komponente (Tabelle 11) im Mischungsverhältnis 100:104 mit einem Laborrührer (Typ EWTHV-05 der Fa. Vollrath GmbH) 10 Sekunden lang verrührt. Direkt anschließend wurde dieses reagierende PU-System im Verhältnis 20 Gew% PU-System: 80 Gew% Partikel auf die Partikel eingewogen und in einem Kunststoffgefäß aus Polyethylen intensiv 30 sec lang mithilfe des Laborrührers vermischt, bevor es in die Form ausgetragen wurde. Als Formen dienten offene, trennmittelbehandelte Holzrahmen mit einem Innenmaß von 20 x 20 x 1,4 cm. Nach dem Glätten der Oberfläche mittels Teflonfolie wurde das System für mindesten 30 min zur Aushärtung in der Form gelassen. Vor der Prüfung der Testplatten wurden diese für mindestens 2 Tage bei Raumtemperatur gelagert, um sicherzustellen, dass das PU-System vollständig ausreagiert ist. Die Stauchhärten der erhaltenen Prüfplatten sind in Tabelle 12 aufgelistet. Die Bestimmung der Stauchhärten und der Dichte erfolgt analog zum Vorgehen für die eTPU Platten.

**5. Vergleichsbeispiele zur Herstellung von Hybridmaterialien aus Blockschaum (Binder) und eTPU (Vergleichsbeispiele 8 bis 10)**

5.1 Vergleichsbeispiel 8

Aus Beispiel 7 wurde mittels PU-Schaumsystem Formteile hergestellt. Hierzu wurde zunächst die Flüssigrezepturkomponenten gemäß Rezeptur (Tabelle 10) angesetzt und dann mit der B-Komponente (Tabelle 11) im Mischungsverhältnis 100:104 mit einem Laborrührer (Typ EWTHV-05 der Fa. Vollrath GmbH) 10 sec lang verrührt. Die B-Komponente hatte einen Rest-NCO Gehalt von 18%. Die Bestimmung des Gehaltes an Rest-NCO erfolgt mittels potentiometrischer Titration durch Verwendung einer Chlorbenzol- Amin Lösung.

Direkt anschließend wurde dieses reagierende PU-System im Verhältnis 61,5 Gew% PU-System: 38,5 Gew% Partikel auf die Partikel eingewogen und in einem Kunststoffgefäß aus Polyethylen intensiv 30 sec lang mithilfe des Laborrührers vermischt, bevor es in die Form eingefüllt wurde. Als Form diente eine mit Teflonfolie beschichtete Holzform mit einem Innenmaß von 20 x 20 x 2 cm. Nach dem Befüllen wurde die Form mit einem Deckel fest verschlossen. Zur ausreichenden Aushärtung des PU-Schaumsystems wurden die Formteile 120 Minuten in der Form gelassen. Vor den Prüfungen an den Testplatten wurden diese für mindestens 2 Tage bei Raumtemperatur gelagert, um sicherzustellen, dass das PU-System vollständig ausreagiert ist.

5.2 Vergleichsbeispiel 9

Aus Beispiel 6 wurde mittels PU-System Formteile analog Vergleichsbeispiel 9 hergestellt.

5.3 Vergleichsbeispiel 10

Aus Vergleichsbeispiel 1 wurde mittels PU-System Formteile analog Vergleichsbeispiel 9 hergestellt.

Tabelle 9: Zusammensetzung der A-Komponente

| Name | Gew.% | OH- / NH-Zahl | H2O [%] |
|---|---|---|---|
| Polyetherpolyol mit einer OH-Zahl von 56 und ausschließlich primären OH-Gruppen (basierend auf Tetramethylenoxid, Funktionalität: 2) [Gewichtsteile] | 67,0 | 56,0 | 0,015 |
| Rizinusöl | 21,0 | 160,5 | 0,030 |
| Monoethylenglykol | 4,6 | 1810,0 | 0,200 |
| Hydroxyphenylbenzotriazol basierter UV Stabilisator | 3,0 | 180,0 | 0,040 |
| Silikon basiertes Tensid | 2,0 | 115,0 | 0,200 |
| 50% Wasser und 50% Fettsäuresulfonat | 2,0 | 0,0 | 50,000 |

(fortgesetzt)

| Name | Gew.% | OH- / NH-Zahl | H2O [%] |
|---|---|---|---|
| 1-Methylimidazol | 0,4 | 4,0 | 0,500 |

Tabelle 10: Zusammensetzung der B-Komponente mit einem Rest-NCO von 18%

| Name | Gew.% |
|---|---|
| aromatisches Isocyanat (4,4' Methylendiphenyldiisocyanat) [Gewichtstei le] | 61,4 |
| Carbodiimid modifizertes MDI (4,4'MMDI[76]/CARBODIIMIDMOD. 4,4'MMDI[24]) | 2 |
| Phenol-basiertes, primäres Antioxidanz | 0,09 |
| Diglycol-bis-Chlorformiat | 0,01 |
| Polyolmischung aus 89,05% Polypropylenglykol mit einem zahlenmittleren Molekulargewicht (Mn) von 2000 g/mol (Funktionalität = 2) und 10,95% Tripropylenglykol | 36,5 |

Tabelle 11: Ergebnisse der Stauchhärteprüfung (1. Zyklus) der Hybridmaterialien aus Binder und eTPU der Beispiele und Vergleichsbeispiele Plattendicke 20 mm.

| | Eingesetztes eTPU | Bauteildichte (kg/m$^3$) | Stauchhärte 10% (kPa) | Stauchhärte 25% (kPa) | Stauchhärte 50% (kPa) | Stauchhärte 65% (kPa) | Stauchhärte 75% (kPa) | StH 65%/ StH 25% (kPa/kPa) |
|---|---|---|---|---|---|---|---|---|
| Bsp 17 | Bsp. 2 | 235 | 16 | 39 | 129 | 350 | 1004 | 9,0 |
| Bsp 18 | Bsp. 1 | 238 | 18 | 42 | 134 | 364 | 1050 | 8,7 |
| Bsp 19 | Bsp. 3 | 240 | 20 | 48 | 150 | 419 | 1211 | 8,7 |
| Bsp 20 | Bsp. 4 | 215 | 13 | 34 | 116 | 320 | 878 | 9,4 |
| Bsp. 21 | Bsp. 5 | 198 | 7 | 20 | 79 | 233 | 679 | 11,7 |
| Bsp.22 | Bsp. 6 | 180 | 8 | 21 | 80 | 213 | 509 | 10,1 |
| Vergleichsbsp. 8 | Bsp 7 | 351 | 114 | 208 | 517 | 1263 | 3939 | 6,1 |
| Vergleichs- bsp.9 | Bsp .6 | 253 | 101 | 192 | 445 | 986 | 2616 | 5,1 |
| Vergleichsbsp. 10 | Vergl. Bsp. 1 | 321 | 172 | 286 | 625 | 1460 | 4319 | 5,1 |

Tabelle 12: Ergebnisse der Stauchhärteprüfung (4. Zyklus) der Hybridmaterialien aus Binder und eTPU der Beispiele und Verleichsbeisiele Plattendicke 20 mm)

| | Eingesetztes eTPU | Bauteildichte (kg/m³) | Stauchhärte 10% (kPa) | Stauchhärte 25% (kPa) | Stauchhärte 50% (kPa) | Stauchhärte 65% (kPa) | Stauchhärte 75% (kPa) | StH 65%/ StH 25% (kPa/kPa) |
|---|---|---|---|---|---|---|---|---|
| Vergleichsbsp. 8 | Bsp 7 | 351 | 46 | 125 | 353 | 913 | 3436 | 7,3 |
| Vergleichsbsp. 9 | Bsp .6 | 253 | 48 | 129 | 337 | 776 | 2311 | 6,0 |
| Vergleichsbsp. 10 | Vergl. Bsp. 1 | 321 | 60 | 156 | 398 | 1005 | 3707 | 6,4 |

II. Messmethoden

**1. Referenzbeispiel 1: Bestimmung des G-Moduls (Speichermodul)**

1.1 Kompaktes Material

Das G-Modul eines kompakten thermoplastischen Elastomer wird bestimmt mittels einer dynamisch-mechanischen Analyse (DMA) nach DIN EN ISO 6721-1-7:2018-03 an Prüfkörpern, insbesondere an Spritzgussplatten, die zuvor 20 h bei 100 °C getempert wurden, allerdings mit einem 5 °C Stufenheizprogramm vergleichbar mit einer kontinuierlichen 2 °C/Min Heizrate, unter Torsion, bei 1 Hz von -80 bis 120 °C gemessen und daraus wird der Speichermodul (G-Modul) bei 25 °C bestimmt.

1.2 Geschäumtes Granulat

Zur Bestimmung des G-Moduls von einzelnen, losen Schaumpartikeln werden diese zunächst in einen Zylinder gefüllt und durch mehrmalige Komprimierung verdichtet, sodass eine möglichst hohe Packungsdichte erzielt wird. Anschließend wird unter quasistatischer Kompression, der durch vorheriges Komprimieren, der Kompressionsmodul bestimmt, aus diesem der Speichermodul (G-Modul) berechnet wird.

1.3 eTPE Formteile

Die Bestimmung des G-Moduls der verschweißten Beispiele und verschweißten Vergleichsbeispiele erfolgt mittels einer dynamisch-mechanischen Analyse (DMA) nach DIN EN ISO 6721-1-7:2018-03 an den eTPE-Formköpern, die zuvor 4 h bei 70 °C getempert wurden, allerdings mit einem 5 °C Stufenheizprogramm vergleichbar mit einer kontinuierlichen 2 °C/min Heizrate, unter Torsion, bei 1 Hz von -80 bis 120 °C gemessen und daraus der G-Modul bei 25 °C bestimmt. Für die Herstellung der dazu verwendeten Probenkörper mit den Abmessungen 50 * x 12 x* 5 mm wird eine Platte aus eTPU (200 x 200 x 10 oder 20 mm) zunächst in der Länge halbiert. Anschließend wird mit einer Spaltmaschine die Haut oben und unten so entfernt, dass man ein Sheet mit einer Dicke von 5 mm erhalten wird. Es wird dabei darauf geachtet, dass das Sheet mittig aus der Platte geschnitten wird. Aus diesem Sheet wird dann der Probenkörper ausgestanzt.

**2. Referenzbeispiel 2: Bestimmung der Formteil-Dichte**

Vor der eigentlichen Prüfung werden die Länge und Breite des Probenkörpers mittels Messschieber (Ablesbarkeit: ± 0,01 mm, Messung erfolgt an je einer Stelle mittig am Bauteil) und das Gewicht des Probenkörpers mit einer Präzisionswaage (Ablesbarkeit: ± 0,001 g) bestimmt. Die Probendicke wird durch die Prüfmaschine der Stauchhärte Messung über das Wegmesssystem "Traverse" (Genauigkeit: ± 0,25 mm) ermittelt. Ausgehend von den Messwerten können dann das Volumen und die Dichte berechnet werden.

**3. Referenzbeispiel 3: Bestimmung des Komfort-Faktors**

Analog zum SAG-Faktor wird der Komfortfaktor als Quotient der Stauchhärte (StH) bei einer Stauchung von 65 % zu der Stauchhärte bei einer Stauchung bei 25 % betrachtet. Vergleichsmessungen mit eTPU- und Weichschaumplatten zeigen, dass mit beiden Messverfahren (SAG-Wert-Bestimmung und Stauchhärte-Prüfung) beim Vergleich verschiedener Materialien die gleichen Tendenzen aufgezeigt werden. Die Absolutwerte der ermittelten Quotienten können für eTPU voneinander abweichen, was darauf zurückgeführt werden kann, dass bei der SAG-Faktor Bestimmung das Vorhandensein bzw. die Beschaffenheit der Probenkörperhaut, im Gegensatz zur Stauchhärtebestimmung, die Messung beeinflusst. Da der Einfluss der Haut auf die Eigenschaften aber auch je nach Anwendung des Bauteils sehr unterschiedlich sein kann, kann auch die Stauchhärte genutzt werden um verschiedene Materialen gegenüberzustellen.

**4. Referenzbeispiel 4: Bestimmung der Schüttdichte**

Die Schüttdichte der Partikelschäume wird über das Volumen und die Masse einer Partikelschüttung in einem Gefäß (10 L) gravimetrisch bestimmt. Dafür werden etwa 11 bis 12 L Partikel in einen, am unteren Auslass verschlossenen Trichter gefüllt. Zum Befüllen wird das 10 L Gefäßes mittig unter dem Trichter platziert. Anschließend wird der Verschluss des Trichters geöffnet, sodass die Partikel gleichmäßig in den Behälter mit einem definierten Volumen (10 L) fließen. Die Oberfläche des Behälters wird im Winkel von 45° mit einer flachen Kante abgestrichen. Die Bestimmung der Masse erfolgt dann gravimetrisch mit einer Waage. Diese muss entweder vorab auf das Leergewicht des Behälters tariert werden oder das Leergewicht muss nachträglich abgezogen werden um das Gewicht der Schüttung zu erhalten. Das Gewicht dividiert durch das Volumen entspricht dann der Schüttdichte des Partikelschaums. Sowohl bei der Befüllung des Probengefäßes mit Partikeln als auch beim Transport zur Waage ist darauf zu achten, dass das Gefäß keiner Vibration oder Stößen ausgesetzt ist.

## 5. Referenzbeispiel 5: Bestimmung der Stauchhärte

Die für die Messung verwendeten Prüfkörper (50 mm x 50 mm x Originaldicke der Prüfplatte (in der Regel 20 mm, Dicke kann in Abhängigkeit des Schrumpfs leicht variieren, die Außenhaut wird nicht entfernt)) werden mit einer Bandsäge aus einer Prüfplatte (200 x 200 x 20 mm, Abmessungen können in Abhängigkeit des Schrumpfs leicht variieren) entnommen. Die Platte wird vorab für 16 h bei Normklima (23 ± 2 °C und 50 ± 5 % Luftfeuchtigkeit) konditioniert. Die Stauchhärteprüfung erfolgt ebenfalls in diesem Klima.

Vor der eigentlichen Prüfung werden die Länge und Breite des Probenkörpers mittels Messschieber (Ablesbarkeit: ± 0,01 mm, Messung erfolgt an je einer Stelle mittig am Bauteil) und das Gewicht des Probenkörpers mit einer Präzisionswaage (Ablesbarkeit: ± 0,001 g) bestimmt.

Die Bestimmung der Stauchhärte erfolgt mit einer Prüfmaschine, die mit einem 50 kN Kraftaufnehmer (Klasse 1 nach DIN EN ISO 7500-1:2018-06), einem Traversenwegaufnehmer (Klasse 1 nach DIN EN ISO 9513:2013) und zwei parallelen Druckplatten (Durchmesser 200 mm, max. zulässige Kraft 250 kN, max. zulässige Flächenpressung 300 $N/mm^2$) ohne Löcher ausgerüstet ist. Zur Ermittlung der Dichte der Prüfkörper werden Länge, Breite und Gewicht in die Zwick-Prüfvorschrift geladen. Die Probendicke wird durch die Universalprüfmaschine über das Wegmesssystem "Traverse" (Genauigkeit: ± 0,25 mm) ermittelt. Die Messung selbst erfolgt mit einer Prüfgeschwindigkeit von 50 mm/min und einer Vorkraft von 1 N. Aufgezeichnet werden jeweils die Spannungswerte bei Stauchungen von 10, 25, 50, 65 und 75 %. Für die Auswertung werden die Werte der 1. Stauchung und auch der 4. Stauchung verwendet. Die Berechnung der Stauchhärte erfolgt nach Gleichung (4). Dabei ist die Stauchhärte $\sigma$ die zu einer Verformung (z.B. 50 %) beim Belastungsvorgang ermittelte Druckspannung in kPa.

$$\sigma = (F_x/A_0) \times 1000 \tag{4}$$

$F_x$ = Kraft bei x% Verformung [N]
$A_0$ = Anfangsquerschnitt des Prüfkörpers [$mm^2$]

## 6. Referenzbeispiel 6: Bestimmung des G-Moduls eines kompaktierten Schaums

Die Herstellung von Prüfkörpern zur Bestimmung des G-Moduls aus eTPU Materialien erfolgt mittels Spritzgusses. Dafür wird das eTPU Material aus dem Bauteil entfernt und, anschließend, auf einer Mühle vermahlen (8 mm Siebbahn auf einer Dreher S26/26 GFX-Spez-L). Die erhalten eTPU Stückchen wurden anschließend für 3 h bei 110 °C getrocknet und bei einer maximalen Zylindertemperatur von 210 - 215 °C, Düsentemperatur 210 - 220 °C und einer Werkzeugtemperatur von 35 °C in einer Spritzgussmaschine zu 2 mm dicken Prüfkörpern verarbeitet (Zykluszeit 75 s). Die so erhaltenen Prüfkörper wurden unmittelbar bei 100 °C für 20 h getempert. Daraufhin wurde der Speicher-Modul (G-Modul) entsprechend Referenzbeispiel 1 (kompaktes Material) bestimmt.

## Zitierte Literatur

Ullmanns "Encyklopädie der technischen Chemie", 4. Auflage, Band 20, S. 416 ff.
WO 94/20568
WO 2007/082838 A1
WO2017/030835
WO 2013/153190 A1
WO2010/010010
"Handbook of Thermoplastic Elastomers", 2. Auflage Juni 2014
"Polymer Chemistry", Interscience Publ., New York, 1961, S.111-127
Kunststoffhandbuch, Band VIII, C. Hanser Verlag, München 1973
Journal of Polymer Science, Part A1, 4, Seiten 1851-1859 (1966)
Kunststoffhandbuch, Band VII, Carl Hanser Verlag, München 1966 (S. 103-113)
Kunststoffhandbuch, Band 7, Polyurethane", Carl Hanser Verlag, 3. Auflage 1993, Kapitel 3 "Integralschaumstoff', Carl-Hanser-Verlag, München, Wien, 1975
Kunststoff-Handbuch, Band 7, Polyurethane, 3. Auflage, 1993, Kapitel 7
EP 1979401 B1
EP 3053732 A1
WO 2016/146537 A1

**Patentansprüche**

1. Formkörper, umfassend einen Schaum aus einem thermoplastischen Elastomer (TPE-1), wobei der Schaum einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, wobei der Schaum ein geschäumtes Granulat ist,
wobei das thermoplastische Elastomer (TPE-1) ausgewählt ist aus der Gruppe bestehend aus thermoplastischen Polyurethanen, thermoplastischen Polyetheramiden, Polyetherestern, Polyesterestern, thermoplastischen Elastomeren auf Olefinbasis, vernetzten thermoplastischen Elastomeren auf Olefinbasis, thermoplastischen Vulkanisaten oder thermoplastischen Styrol Butadien-Blockcopolymeren.

2. Formkörper gemäß Anspruch 1, wobei das thermoplastische Elastomer (TPE-1) in kompaktem Zustand ein G-Modul im Bereich von 0,8 bis 8,5 MPa aufweist, bestimmt gemäß Referenzbeispiel 6.

3. Formkörper gemäß einem der Ansprüche 1 oder 2, wobei der Formkörper eine Hülle und die Partikel des geschäumten Granulats umfasst.

4. Formkörper gemäß einem der Ansprüche 1 oder 2, wobei der Schaum aus verschweißten Partikeln des geschäumten Granulats besteht.

5. Formkörper gemäß einem der Ansprüche 1 bis 4, wobei der Schaum ein Hybridschaum umfassend ein geschäumtes Granulat aus einem thermoplastischen Elastomer (TPE-1) ist.

6. Verfahren zur Herstellung eines Formkörpers umfassend die Schritte

(i) Bereitstellen eines Schaums aus einem thermoplastischen Elastomer (TPE-1), wobei der Schaum einen Speicher-Modul (G-Modul) bei 25 °C und 1 Hz im Bereich von 0,01 bis 0, 5 MPa aufweist, bestimmt gemäß Referenzbeispiel 1 (TPE Formteil), und eine Formteil-Dichte im Bereich von 20 bis 400 kg/m$^3$ aufweist, bestimmt gemäß Referenzbeispiel 2, wobei der Schaum ein geschäumtes Granulat ist,
wobei das thermoplastische Elastomer (TPE-1) ausgewählt ist aus der Gruppe bestehend aus thermoplastischen Polyurethanen, thermoplastischen Polyetheramiden, Polyetherestern, Polyesterestern, thermoplastischen Elastomeren auf Olefinbasis, vernetzten thermoplastischen Elastomeren auf Olefinbasis, thermoplastischen Vulkanisaten oder thermoplastischen Styrol Butadien-Blockcopolymeren;
(ii) Verarbeitung des Schaums zu einem Formkörper.

7. Verfahren gemäß Anspruch 6, wobei die Verarbeitung gemäß Schritt (ii) mittels Verschweißen, Umschäumen oder Verkleben der Partikel des geschäumten Granulats erfolgt.

8. Formkörper, erhalten oder erhältlich gemäß einem Verfahren nach einem der Ansprüche 6 oder 7.

9. Formkörper gemäß Anspruch 8 wobei der Formkörper eine Schuhsohle, ein Teil einer Schuhsohle, ein Fahrradsattel, eine Polsterung, eine Matratze, Kissen, Rückenlehne, Armpolster, Auflage, Unterlage, Griff, Schutzfolie, ein Protektor, Dämpfungselement, eine Fallschutzmatte, ein elastisches Dämmmaterial, Dichtungsmaterial, ein Bauteil im Automobilinnen- und -außenbereich ist.

10. Verwendung eines Formkörpers gemäß einem der Ansprüche 1 bis 5 oder 9 zur Herstellung von Böden, Matratzen, Sitzmöbeln, eines Fahrradsattels, von Autositzen, Motorradsitze, Bauteilen eines Schuhs, als Schuheinleger, Verpackung, Stoßdämpfer, Protektoren, Fallschutzmatten, elastisches Dämmmaterial, Dichtungsmaterial.

**Claims**

1. A molded article comprising a foam composed of a thermoplastic elastomer (TPE-1), wherein the foam has a storage modulus (G modulus) at 25°C and 1 Hz within the range from 0.01 to 0.5 MPa, determined in accordance with Reference Example 1 (TPE molding), and a molding density within the range from 20 to 400 kg/m$^3$, determined in accordance with Reference Example 2, wherein the foam is a foamed pellet material,
wherein the thermoplastic elastomer (TPE-1) is selected from the group consisting of thermoplastic polyurethanes, thermoplastic polyetheramides, polyetheresters, polyesteresters, thermoplastic olefin-based elastomers, crosslinked thermoplastic olefin-based elastomers, thermoplastic vulcanizates or thermoplastic styrene-butadiene block copolymers.

2. The molded article according to claim 1, wherein the thermoplastic elastomer (TPE-1) in the compact state has a G modulus within the range from 0.8 to 8.5 MPa, determined in accordance with Reference Example 6.

3. The molded article according to either of claims 1 or 2, wherein the molded article comprises a shell and the beads of the foamed pellet material.

4. The molded article according to either of claims 1 or 2, wherein the foam consists of welded beads of the foamed pellet material.

5. The molded article according to any of claims 1 to 4, wherein the foam is a hybrid foam comprising a foamed pellet material composed of a thermoplastic elastomer (TPE-1).

6. A process for producing a molded article comprising the steps of

   (i) providing a foam composed of a thermoplastic elastomer (TPE-1), wherein the foam has a storage modulus (G modulus) at 25°C and 1 Hz within the range from 0.01 to 0.5 MPa, determined in accordance with Reference Example 1 (TPE molding), and a molding density within the range from 20 to 400 kg/m$^3$, determined in accordance with Reference Example 2, wherein the foam is a foamed pellet material,
   wherein the thermoplastic elastomer (TPE-1) is selected from the group consisting of thermoplastic polyurethanes, thermoplastic polyetheramides, polyetheresters, polyesteresters, thermoplastic olefin-based elastomers, crosslinked thermoplastic olefin-based elastomers, thermoplastic vulcanizates or thermoplastic styrene-butadiene block copolymers;
   (ii) processing the foam into a molded article.

7. The process according to claim 6, wherein the processing in accordance with step (ii) takes place by means of welding, foaming or bonding the beads of the foamed pellet material.

8. A molded article obtained or obtainable by a process according to either of claims 6 or 7.

9. The molded article according to claim 8, wherein the molded article is a shoe sole, part of a shoe sole, a bicycle saddle, cushioning, a mattress, padding, backrest, arm pad, pad, underlay, handle, protective film, a protector, damping element, a fall protection mat, an elastic insulating material, sealing material or a component in the automotive interior and exterior sector.

10. The use of a molded article according to any of claims 1 to 5 or 9 for producing floors, mattresses, seating furniture, a bicycle saddle, car seats, motorcycle seats, components of a shoe, as shoe inserts, packaging, shock absorbers, protectors, fall protection mats, elastic insulating material or sealing material.

**Revendications**

1. Objet moulé, comprenant une mousse en un élastomère thermoplastique (TPE-1), la mousse présentant un module de conservation (module G) à 25 °C et 1 Hz dans la plage de 0,01 à 0,5 MPa, déterminé selon l'exemple de référence 1 (pièce moulée en TPE), et présente une masse volumique de la pièce moulée dans la plage de 20 à 400 kg/m$^3$, déterminée selon l'exemple de référence 2, la mousse étant un granulé expansé,
l'élastomère thermoplastique (TPE-1) étant choisi dans le groupe consistant en les polyuréthanes thermoplastiques, les polyétheramides thermoplastiques, les polyétheresters, les polyesteresters, les élastomères thermoplastiques à base d'oléfines, les élastomères thermoplastiques réticulés à base d'oléfines, les vulcanisats thermoplastiques ou les copolymères à blocs styrène-butadiène thermoplastiques.

2. Objet moulé selon la revendication 1, dans lequel l'élastomère thermoplastique (TPE-1) présente à l'état compact un module de conservation dans la plage de 0,8 à 8,5 MPa, déterminé selon l'exemple de référence 6.

3. Objet moulé selon l'une des revendications 1 ou 2, l'objet moulé comprenant une enveloppe et les particules du granulé expansé.

4. Objet moulé selon l'une des revendications 1 ou 2, la mousse étant constituée de particules soudées du granulé expansé.

5. Objet moulé selon l'une des revendications 1 à 4, dans lequel la mousse est une mousse hybride comprenant un granulé expansé d'un élastomère thermoplastique (TPE-1) .

6. Procédé de fabrication d'un objet moulé, comprenant les étapes suivantes :

(i) fourniture d'une mousse d'un élastomère thermoplastique (TPE-1), la mousse présentant un module de conservation (module G) à 25 °C et 1 Hz dans la plage de 0,01 à 0,5 MPa, déterminé selon l'exemple de référence 1 (pièce moulée en TPE), et une masse volumique de la pièce moulée dans la plage de 20 à 400 kg/m$^3$, déterminée selon l'exemple de référence 2, la mousse étant un granulé expansé,
dans lequel l'élastomère thermoplastique (TPE-1) est choisi dans le groupe consistant en les polyuréthanes thermoplastiques, les polyétheramides thermoplastiques, les polyétheresters, les polyesteresters, les élastomères thermoplastiques à base d'oléfines, les élastomères thermoplastiques réticulés à base d'oléfines, les vulcanisats thermoplastiques ou les copolymères à blocs styrène-butadiène thermoplastiques ;
(ii) mise en œuvre de la mousse pour donner un objet moulé.

7. Procédé selon la revendication 6, dans lequel la mise en œuvre selon l'étape (ii) est réalisée par soudage, enrobage de mousse ou collage des particules du granulé expansé.

8. Objet moulé, obtenu ou pouvant être obtenu par un procédé selon l'une des revendications 6 ou 7.

9. Objet moulé selon la revendication 8, l'objet moulé étant une semelle de chaussure, une partie d'une semelle de chaussure, une selle de vélo, un rembourrage, un matelas, un coussin, un dossier, un accoudoir, un surmatelas, une alaise, une poignée, une feuille protectrice, un protecteur, un élément d'amortissement, un carreau de protection antichute, un matériau isolant élastique, un matériau d'étanchéité, un composant dans le domaine intérieur et extérieur d'une automobile.

10. Utilisation d'un objet moulé selon l'une des revendications 1 à 5 ou 9 pour fabriquer des sols, des matelas, des sièges, une selle de vélo, des sièges pour automobile, des sièges de moto, des composants d'une chaussure, en tant que semelle intérieure de chaussure, emballage, amortisseur, protecteurs, carreaux de protection antichute, matériau isolant élastique, matériau d'étanchéité.

Fig. 1

x-Achse: Weg/%
y-Achse: Kraft

‑‑‑‑‑‑‑‑‑‑‑     Erfindungsgemäßes Beispiel
———————     Vergleichsbeispiel

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9420568 A
- WO 2007082838 A1
- WO 2017030835 A
- WO 2013153190 A1
- WO 2010010010 A
- EP 1979401 B1
- EP 3053732 A
- WO 16146537 A
- WO 2007082838 A
- EP 3053732 A1
- WO 2016146537 A1

**In der Beschreibung aufgeführte Nicht-Patentliteratur**

- **ULLMANNS.** Encyklopädie der technischen Chemie. vol. 20, 416
- Handbook of Thermoplastic Elastomers. Juni 2014
- Polymer Chemistry. Interscience Publ, 1961, 111-127
- Kunststoffhandbuch. C. Hanser Verlag, 1973, vol. VI-II
- *Journal of Polymer Science,* 1966, vol. 4, 1851-1859
- **VON VIEWEG ; HÖCHTLEN.** Kunststoffhandbuch. Carl Hanser Verlag, 1966, vol. VII, 103-113
- Polyurethane. Kunststoffhandbuch. Carl Hanser Verlag, 1993, vol. 7
- Integralschaumstoff. Carl-Hanser-Verlag, 1975
- Polyurethane. Kunststoff-Handbuch. 1993, vol. 7
- Kunststoffhandbuch. Carl Hanser Verlag, 1966, vol. VII, 103-113